# EUROPEAN PATENT APPLICATION

(11) **EP 2 801 257 A1**
(43) Date of publication of application: **12.11.2014**
(21) Application number: 13425072.9
(22) Date of filing: 10.05.2013
(51) Int. Cl.: A21D 2/18, A21D 8/04, A21D 10/00

(54) **Leavening preparation comprising a stabilized enzymatic mixture**

(71) Applicant: Casteggio Lieviti S.r.l., 27045 Casteggio (PV) (IT)
(72) Inventor: Pasturenzi, Piero, 27045 Casteggio, Pavia (IT); D'Incecco, Lorenzo, 65100 Pescara (IT)
(74) Representative: Croce, Valeria

(57) **Abstract**

The present invention concerns an improved leavening preparation thanks to a stabilized enzymatic mixture and the process for obtaining it.

## Description

The present invention improves the baking process.

### Prior Art

There are known in the art the so-called "backery improvers".

In particular, this term refers to those products that are able to help the baking process from the technological point of view, making it easier or faster, or improving the taste, since they allow to give to the final product such characteristics as the smell, aroma or fragrance, particularly desirable to the consumer.

Their use is also widespread in the craft sector and in the industrial sector, whose mechanization and automation have accelerated the birth and the subsequent development of preparations that help the baking process.

It is in this area that the use of such aids is particularly useful; in fact, the complexity of the operations, unfortunately, broaden the range of possible error in the sequence of the operations or in adding the ingredients.

The creation of a single mixture including all the useful ingredients for bread-making was seen immediately as a major step forward.

Another aspect not to be underestimated is related to the ability to complete the cycle of backing in a time frame compatible with the needs of industrial production.

Again, one of the optimal characteristics of an enhancer is represented by the tolerance to variability, that is, its ability to adapt to the rheological properties of the flour and the other ingredients, to the process temperatures, to the possible different timing working, to a treatment more "rough" during mixing and/or sizing, humidity, unsuitable leavening times, to the curve of the heating temperature, and so on.

The functions, instead, of an optimal improver include: imparting a good volume of development to the mass, imparting a good texture to the crumb so that it has a uniform alveolation, a good elastic compactness, a delicate and thin crust and a longer shelf- life.

In general, an improver for bakery can be of the type:
● paste, or
● powder.

In the paste improvers the main component is represented by a fatty substance, while in powder improvers it is a flour or a mixture of flours.

In both cases, therefore, fat and flour act as the support and/or as a dispersant for the other ingredients of the formulation.

It is known in the sector, however, the need for a product for bakery, which has optimal characteristics both from the point of view of the industrial workability and ease of use and from the point of view of the results provided.

### Summary of the invention

It was surprisingly found an improving baking composition comprising a stabilized enzymatic mixture.

### Object of the invention

According to a first object, the present invention describes a baking improver.

In a second aspect, there is described a process for the preparation of such improver.

A baking process comprising the use of the improver of the invention and the product thus obtained are further aspects of the invention.

Again, it is described a method for stabilizing a mixture of enzymes for baking in a paste composition.

### Detailed description of the invention

For the purposes of the present invention, a leavening preparation in paste form is a preparation of active yeast (*Saccharomyces cerevisiae*) obtained according to the methods known in the art and characterized by a water content of about 60-70% and preferably of 68%.

Moreover, according to a preferred aspect, such a preparation of yeast is pressed.

In particular, for the present invention it is preferably used the specific strain of S. *cerevisiae* Y1408 (owned by AB Mauri), which has proven to be surprisingly active and to have excellent properties of developing CO₂.

As for the improving composition, instead, this comprises a stabilized enzymatic mixture.

More particularly, said composition comprises a mixture of enzymes and a carrier (support mixture).

### Enzyme mixture (or enzyme cocktail)

The enzyme cocktail comprises one or more of the following proteins:
i) amylase
ii) xylanase
iii) phospholipase, and possibly
iv) glucose-oxidase.

In a preferred aspect of the present invention, the mixture comprises amylase, xylanase, and phospholipase, and possibly glucose-oxidase.

With particular reference to amylases these are intended as including both α-amylase and β-amylase.

For the purposes of the present invention, the enzymes described above are characterized by the activity stated in the following Table:

| **ENZYME** | **ACTIVITY (method)** |
|---|---|
| amylase | about 40,000-50,000 U/g, pref about 45,000 U/g (Megazyme Assay, Ceralpha) |
| xylanase | about 400-600 U/g, pref about 480-520 U/g (Megazyme assay, Xylazyme AX) |
| phospholipase | about 680-820 U/g, pref 740-760 U/g (TNO pH Stat Method) |

Overall these enzymes enhance or complement the effects of the proteins naturally present in the flours, but that for various reasons (environmental conditions, status and type of raw materials and so on) are believed insufficient to achieve the desired effect or are considered requesting timing not compatible with the production needs.

In particular, from the technical point of view it has been seen that these contribute to the swelling of the starch, to the formation of dextrin and maltose, to the glucose splitting and to the process of fermentation.

As above described, the enzyme cocktail of the leavening preparation of the present invention is supported on a carrier.

This carrier can be represented by a flour or a preparation of starch, preferably potato or rice starch, or from a preparation of yeast, such as a yeast extract or yeast.

In the latter case, the yeast can be in the inactivated form.

There can be also provided that the carrier comprises a mixture of such preparations.

In any case, according to a preferred embodiment of the invention, such preparations are in the dry form.

Among the flours and starches used as carrier for present purposes, it is excluded that of wheat, and even more preferably it is excluded that of soybean.

According to a preferred aspect the carrier of the present invention is represented by a preparation of inactivated yeast in dry form (that is, with a water content of less than 8%).

The carrier of the present invention may comprise in addition to a base as above described, one or more additional components selected from a sugar, a salt or fat.

For the purposes of the present invention, the sugars may be selected from among mono-, oli- and polysaccharides, represented for example by glucose, fructose, saccharose, galactose or dextrin.

In a preferred aspect, the carrier comprises dextrins.

As for the salts, however, these can be selected from chlorides, such as sodium chloride, potassium or ammonium, among carbonates and bicarbonates, such as sodium bicarbonate; alternatively, mixtures of such salts may be comprised.

In a preferred aspect, the carrier comprises sodium chloride.

As for the fats, these can be of animal or vegetable origin.

Among the animal fats there can be mentioned the butter and lard.

Among the fats of vegetable origin, instead, there may be mentioned oils, such as olive oil or seed oil, such as corn, peanut, sunflower seed oil, and so on.

In a preferred embodiment, the carrier comprises sunflower seeds oil.

In the following Table there is reported a preferred composition of the carrier according to the invention:

| | |
|---|---|
| Starch based or yeast preparation | ~ 60-70% |
| sugar | ~ 2-4% |
| salt | ~ 1,5-2,5% |
| fat | ~ 1-2% |

wherein the percentages are by weight of the total enhancer composition.

For purposes of the present invention, the carrier is included in the enzyme mixture in an amount of about 65-80% by weight on the total weight of the enzyme mixture.

According to a particularly preferred aspect of the invention, the enhancer composition also includes an oxidizing agent.

Its role is to act in particular on the cysteine amino acid residues in the gluten protein chains, giving disulfide bonds.

This results in a higher toughness and elasticity of the dough.

The oxidant is generally represented by ascorbic acid.

In a preferred aspect of the invention, the ascorbic acid is mixed with the other components in powder form and is present in amount of about 55-65% and preferably about 60% on the total weight of the enhancer composition.

In addition to the enzyme mixture and the oxidizing, the enhancer composition of the invention may further comprise a preparation of inactivated yeast, preferably in dry form.

This component may be present in amounts of about 6-7% by weight on the total weight of the enhancer composition.

Obviously, this amount does not comprise that optional portion of the preparation of inactivated yeast present in the carrier.

According to a more preferred aspect, such inactivated yeast is enriched with glutathione.

This means that the glutathione is present in amounts ranging between 1% and 3%, preferably 2-2.5% and even more preferably of 2.2% (weight/weight of the preparation of inactivated yeast).

The preparation of this component of the enhancer starts with the preparation of a cream yeast according to methods known in the art, which cream is further added with glutathione up to the indicated concentration and, at a later stage, inactivated by a spray-drier treatment so as to obtain a powder.

In order to obtain the improved leavening preparation of the invention, the enhancer composition above described is mixed with the preparation of active yeast in paste in amounts of about 1-2% and, in a preferred aspect, about 1.5% (weight/weight).

In accordance with a second object of the present invention, there is described a process for the preparation of a enhancer composition of breadmaking.

In particular, this process comprises the preparation of a stabilized enzyme mixture obtained by mixing an enzyme cocktail to a support composition (carrier).

In a preferred aspect, said enzyme cocktail and said enzyme mixture have the characteristics described above.

In a preferred aspect, there are also added a preparation of inactive yeast, preferably in the form of dry powder and optionally enriched with glutathione, according to the above.

In a further preferred aspect, to obtain the enhancer composition of the invention there is also added ascorbic acid.

The present patent application also describes a process for obtaining an improved leavening preparation comprising the step of mixing a preparation of yeast in the dough enhancer composition invention.

In particular, the enhancer composition of the invention is contained in the preparation of yeast in dough in amounts ranging from about 1-2%, preferably about 1.5% by weight on the total weight of the improved leavening preparation.

In a preferred aspect, the addition of the enhancer composition of the invention is continuous, through a micro-dispenser, inside the hopper collecting the preparation of active yeast to be drawn.

Thanks to the continuous mixing, the distribution of the improver in the preparation of active yeast is uniform and homogeneous.

At the end of the drawing, packaging can be carried out.

The final obtained product is storable up to 35 days from the production, provided it is stored at a temperature of about 0-10°C, preferably of about 2-6° C, not to cause loss of part of the activity of the yeast nor to cause changes in the organoleptic characteristics of the product.

For use in a baking process, the leavening preparation of the invention can be directly added to a flour or a mixture of flours in a percentage ranging between 1-3% by weight approximately.

These quantities depend largely on the conditions of use, on the production process, on the raw materials and on the environmental conditions.

Among the products that can be prepared with the use of the improver of the invention: bread, rolls, white bread, crackers, bread sticks, large leavened (*Colomba, Panettone, Pandoro, Venetian,* and so on).

The following example describes the possible uses of the product of the invention and is to be considered exemplifying and absolutely not limiting.

### EXAMPLE 1

| | |
|---|---|
| Active Yeast (strain Y1408) | 985‰ |
| Enhancer composition of the invention | 15‰ |
| ascorbic acid | ~ 60% |
| inactive yeast | ~ 7% |
| carrier | ~ 26% |
| enzymes | ~ 7% |

In light of the above, the person skilled in the field will appreciate the many advantages offered by the improved leavening preparation for bakery of the present invention.

In particular, there could be distinguished two types of advantages:
● technological advantages;
● organoleptic benefits.

From the technological point of view, the preparation of the invention allows to obtain a product with characteristics of high-level and surprisingly constant performances.

This is absolutely advantageous, since it allows to compensate and to extensively tolerate the variability of different environmental conditions (mainly the relative humidity), the process conditions (duration and variability of the working phases) and also the quality of raw materials (which can sometimes be not optimal according to the set standards).

It was also surprisingly found that, within the range of concentrations above indicated for the use of the leavening preparation, the results in terms of the development of carbon dioxide, and therefore leavening, are almost constant.

This is possible thanks to the vitality of the strain Y1408 used and the formulation and composition of the enhancer that optimally modulates the activity.

Moreover, the product of the invention is easily adaptable to different types of work and, therefore, can boast a wide range of applications.

In this regard, it is emphasized that the use of the preparation of the invention is not confined to the use in large industrial plants, but can also be used in small bakery and confectionery laboratories.

From the rheological point of view, the leavening product described is capable of imparting a great volume of development, conferring to the crumb an uniform and pleasing texture and alveolation, which is very acceptable to the consumer, a good elastic compactness, of allowing the formation of a crust delicate and thin and of increasing the aptitude to the conservation of the obtained bakery product.

From the laboratory tests carried out it was observed that the combination of the ingredients of the enzyme mixture results in a surprising synergistic action compared to the action exerted by the individual components when not mixed together.

The formulation of the product is also advantageously free from gluten and lactose, that makes it usable for the preparation of baked intended for subjects with particular intolerances and food allergies.

Another non secondary advantage of the leavening preparation of the invention is represented by the fact that the rate between the preparation of yeast in the dough and the enhancer composition is fixed.

The latter is so well formulated and balanced in its components that the yeast, and even more the yeast strain Y 1408 can quickly develop large amounts of carbon dioxide, thus allowing to have a very fast starting point in the leavening of the dough.

This allows to keep the dosage of the preparation of the invention in line with the usual dose of yeast, while ensuring the right leavening power and the right amount of enzymes.

The user will be in the position of employing and then buying, managing, storing and dispensing a single product, with an evident practical advantage.

## Claims

1. An improved leavening preparation in paste form comprising an improveing bakery composition which comprises an enzymatic stabilized mixture.

2. The leavening preparation according to the preceding claim wherein said stabilized enzymatic mixture is comprised in an amount of about 30-35% by weight on the total weight of the enhancer composition.

3. The leavening preparation according to claim 1 or 2, wherein said leavening preparation in paste is pressed.

4. The leavening preparation of the preceding claim, wherein said enzymatic stabilized mixture comprises a carrier based on starch or based on yeast.

5. The leavening preparation according to the preceding claim, wherein said carrier is based on potato starch or on rice starch or on yeast extract or on deactivated yeast.

6. The preparation according to claim 4 or 5, wherein said carrier further comprises one or more components selected from a sugar, a salt or fat.

7. The leavening preparation according to the preceding claim, wherein said sugar is selected from monosaccharides selected from the group which comprises glucose, fructose, oligosaccharides selected from the group which comprises saccharose and galactose, polysaccharides selected from the group comprising dextrins; or mixtures thereof, wherein said salt is selected from the group comprising sodium chloride, potassium chloride, ammonium chloride, sodium bicarbonate or mixtures thereof; wherein said fat is of animal or vegetable origin and is selected from the group which comprises lard, olive oil, seeds oil.

8. The leavening preparation according to any one of the preceding claims, wherein said carrier is comprised in a proportion of about 64-80% in the stabilized enzymatic mixture.

9. The leavening preparation according to any one of the preceding claims, wherein said carrier comprises:
starch, yeast preparation about 60-70% sugar about 2-4%
salt about 1.5-2.5%
fat about 1-2%
wherein the percentages by weight are referred to the total weight of the carrier.

10. The leavening preparation according to any one of the preceding claims, wherein said stabilized enzymatic mixture comprises amylase, xylanase, phospholipase and possibly glucose-oxidase.

11. The leavening preparation according to the preceding claim, wherein said enzymes have the following characteristics:
amylase ~ 40,000-50,000 U/g, preferably ~ 45,000 U/g,
xylanase ~ 400-600 U/g, preferably 480-520 ~ U/g,
phospholipase ~ 680-820 U/g, preferably 740-760 ~ U/g.

12. The leavening preparation according to any one of the preceding claims wherein said enhancer composition further comprises ascorbic acid and possibly a preparation of inactivated yeast, the latter possibly enriched with glutathione, and optionally in dry form.

13. The leavening preparation of claim 12, wherein the ascorbic acid is present in an amount of about 55-65% by weight on the total weight of the improving composition.

14. The leavening preparation according to any one of the preceding claims wherein said enhancer bakery composition is comprised in a quantity of about 1-2%, preferably of about 1.5% by weight on the total of said preparation.

15. Process for obtaining an enhancer bakery composition comprising the step of:
a) mixing one or more enzymes selected from amylase, xylanase, phospholipase, and possibly glucose-oxidase, to a carrier, wherein said carrier is obtained by mixing a preparation based on starch or based on yeast, and optionally one or more components selected from a sugar, a salt, a fat;
b) adding ascorbic acid and optionally also a preparation of inactivated yeast, preferably in dry form, and optionally enriched with glutathione.

16. Process for obtaining a leavening preparation in paste form comprising the step of adding to a preparation of yeast in paste an enhancer composition in powder form comprising a stabilized enzymatic mixture.

17. The process according to the preceding claim wherein said enzymatic enhancer composition is mixed to the preparation of yeast in paste in a quantity ranging from about 1-2%, and preferably of about 1.5%, by weight of the total leavening preparation.

18. Process for the preparation of a bakery product comprising the step of mixing to a flour or a mixture of flours a leavening preparation according to any one of claims 1 to 14.

19. The process according to the preceding claim, wherein the leavening preparation is mixed in quantity ranging from about 1-3%, preferably about 2% by weight on the total weight of the flour or the mixture of flours.

20. A method for stabilizing a mixture of enzymes comprised in a leavening preparation in paste form comprising the step of mixing said enzymes with a carrier comprising: a preparation based on starch or based on yeast and optionally one or more components selected from a sugar, a salt or a fat, so as to obtain a stabilized enzymatic mixture in powder form.
